# EUROPEAN PATENT SPECIFICATION

(11) **EP 3 831 087 B1**
(45) Date of publication and mention of the grant of the patent: **13.11.2024**
(21) Application number: 19748934.7
(22) Date of filing: 30.07.2019
(51) Int. Cl.: H04Q 9/00

(54) **BATTERY MONITOR**
BATTERIEMONITOR
DISPOSITIF DE SURVEILLANCE DE BATTERIE

(30) Priority: 30.07.2018 GB 201812371
(43) Date of publication of application: 09.06.2021
(73) Proprietor: Young & Frewin Ltd, Godalming Surrey GU8 6DQ (GB)
(72) Inventor: FREWIN, Keith, London Greater London E1W 2RX (GB); YOUNG, Barry, Godalming Surrey GU8 6DQ (GB)
(74) Representative: Boult Wade Tennant LLP
(86) International application number: PCT/GB2019/052128
(87) International publication number: WO 2020/025943

(56) References cited:
- WO-A1-2018/126077
- US-A1- 2018 010 919

## Description

### Field of the Invention

The present invention relates to a system and method for monitoring rechargeable batteries and in particular, doing so in a secure and preferably versatile and miniaturised way.

### Background of the Invention

Rechargeable (or secondary) batteries are used in many devices and vehicles. These batteries may be self-contained items or integrated into different products. The batteries may be replaceable, serviceable or designed to be used for the life of the device. There is a need for a low cost device for continuous, long term monitoring of the usage and health of such rechargeable batteries. This process may be useful to determine that the battery is functioning correctly and that it has not been mistreated (such as by completely discharging it or perhaps even over-charging it).

The monitoring may be done over the lifetime of the battery, and monitoring may be required during long periods of non-use or storage. A long term battery monitor must therefore have very low average power consumption so that the battery it is monitoring is not unduly discharged by the monitoring process itself. There is also a need for the battery monitoring system to be low cost, and small in size, which will allow it to be readily incorporated into equipment that uses the battery, or even within the battery itself. Information about battery usage can be useful to a manufacturer, reseller or maintenance organisation for validation of warranty claims, or for product improvement, for example.

Furthermore, there is a need to determine the current state of health of a battery, for example, whether it is fit for use and will be able to supply the rated current over the expected period of use. For standby or emergency equipment, it is vitally important to know that the battery will perform if and when required. In such cases, knowledge of the usage of the battery and its history is useful in determining the current status of the battery. Any episodes of misuse might affect the chemistry and therefore the capacity and performance of the battery. In addition to the foregoing misuse issue, random component or material failure could lead to the inability of the battery to perform at its required level.

Mobile devices, such as smartphones, may contain functionality to monitor battery health. As such devices are regularly charged and replaced quite often, the relatively high level of sampling (in order to provide an accurate battery assessment) which uses battery power, can be tolerated in such environments. However, for other longer-term implementations, especially where processing power is not as readily available then a common approach is regular manual servicing and replacement of the battery to ensure that failure does not occur. However, this can be wasteful in resources and batteries may be replaced before they become exhausted. Furthermore, if abuse of the battery has occurred then the replacement or maintenance schedule may not be regular enough to avoid failure in the field. It is also difficult to prove that a particular user treatment of a battery or battery operated device resulted in its failure and so the cost may be borne by the manufacturer or supplier when this is not justified. Furthermore, rechargeable batteries can have a failure rate and it may be advantageous to be able to determine that a particular battery failure was not caused by abuse but due to a manufacturing defect.

In one example, US2012101755 describes a vehicle battery pack and monitoring controller for monitoring the charge of the battery module. The monitoring controller stores past charge records and past discharge records in a charge-discharge history. The monitoring controller communicates with a vehicle operation management server. However, the data are not secured in any way and so the data may be tampered with.

Therefore, there is required a method and system that overcomes these problems.

US 2018/0010919 describes a system and method for monitoring the health of smart battery packs in an electric vehicle and determining when one or more of the smart battery packs needs to be replaced.

CN 108197960 describes attaching an RFID electronic tag to a battery and storing the information on the RFID tag in a blockchain.

WO2018/126077 describes an Internet of Things network.

### Summary of the Invention

Battery properties or parameters are detected during the lifetime of a rechargeable (secondary) battery or device. These properties may include but are not limited to any one or more of charging current, peak charging current, charging time, charging cycle number, voltage, lowest voltage, temperature, impedance or other parameters that can affect the life and/or performance of the battery or be due to random component or material failure. The battery or device can have a unique identifier. This identifier may be a public key of a public-private key pair, for example. One or more of the parameters can be detected and this identifier can be linked to, combined with or otherwise associated with data defining this one or more parameter. Preferably, the time and/or date that the parameter or parameters were detected and measured is recorded and may be stored with or combined with these data. The battery monitor may contain a clock or have access to time data over a network (e.g. the Internet) for this purpose.

The data are then stored securely and in a way that is tamper-proof or at least tamper detectable. Preferably, the data are stored separately from the battery (either immediately or later on). Data (e.g. one or more battery parameters detected at a particular point in time) may be stored individually or in batches at regular intervals, for example.

The data may be read and verified at a later time to determine a history of the parameters or properties of each battery and as these change over time.

In some implementations, the data are stored within a blockchain (or other distributed ledger) and may be distributed and stored as blocks associated with the identifier or key of the device or battery. Data from different batteries or devices may be stored in the same blockchain or other ledger. There may also be applications where it is important to retain a secure record of the battery history that cannot readily be altered. In such cases a cryptographically secured ledger such as a blockchain can provide a suitable storage mechanism. The time that data was added to a blockchain may also be recorded or this time may be instead of or replace the time recorded by the battery monitor when the battery parameters were detected.

Preferably, the physical device that monitors the battery or batteries is a compact, low cost device for continuous, long term monitoring of the usage patterns and health of a battery. It may be powered by the battery being monitored or may have a separate power source. The device should consume electrical energy at a low rate. Various battery parameters are measured at intervals and the data may be further processed before being recorded in a built-in memory and/or stored remotely, externally or across a network. The data may be communicated to an external device using a wireless or wired communication interface, for further processing or display and provide a tamper-proof record of the battery history. Alternatively, the battery monitor may directly communicate with secure data storage without requiring an intermediate external device. Software within the monitor device or circuit that controls the data processing and storage may be reconfigured or modified in the field to suit a particular application or upgraded or altered over time as different functionality or requirements become necessary.

The battery monitor may continuously or intermittently monitor the usage and history of a battery to check that it is in good condition, functioning correctly and has not been abused (e.g. by total discharge or over-charge). The battery monitor may include one or more sensors to measure battery parameters, which may include any one or more of a voltage sensor for measuring the battery voltage, a current sensor for measuring the battery current (both of charge and discharge), a temperature sensor and/or a means of measuring the AC impedance, resistance and/or reactance and/or DC resistance of the battery, or any other parameter(s) correlated with battery condition. A processor and memory record data measured using the various sensors, which relate to the battery usage and/or condition. A communication interface is configured to allow the recorded battery usage and/or condition data to be read by or transmitted to an external device. The battery monitor may interpret its own sensor data and also or instead provide such an interpretation (e.g. a health rating or score at a particular time). Such a rating may be based on comparisons with predetermined values or tables that are stored locally or retrieved when required.

An electronic test load may be included as the means of measuring the impedance or conductance of the battery. The load current may be varied and may be switched on for a short period sufficient enough to measure the DC impedance (e.g. one second) or conductance of the battery, or to otherwise measure the response of the battery to a load current.

The load current may be modulated with an AC waveform in order to measure the AC impedance, resistance or reactance (or their reciprocals or derivatives) of the battery, in association with an AC voltage sensor incorporated into the battery monitor.

Measurement of AC impedance is particularly useful in diagnosing battery health. A change in battery impedance can indicate deterioration within the battery and can predict impending failure of the battery.

The measured data may be processed and the processed information recorded, so that memory requirements are reduced. The processed information may include: Average, maximum and/or minimum values of voltage, current, temperature, impedance and/or other measured or derived battery parameters, computed over multiple measurement cycles; information relating to the duration, number, timing and/or intensity of periods of charging, discharging and non-usage; information relating to the nature and timing of specific events of interest such as over-charging, deep discharge, and excess current; information relating to general battery condition, which may be recorded with low periodicity, for example daily.

Software within the battery monitor that controls the measurement, processing and storage of battery data can be substantially reconfigured, replaced, and/or updated in the field from an external device such as a smartphone or PC, using the communications interface, providing a high degree of flexibility to the monitoring. Software updates may also be secured or communicated using cryptographic security techniques.

A serial number, blockchain address or other identification information may be stored in non-volatile memory within the battery monitor, in order that an individual battery monitor 10 may be identified by the external device in communication with it via the communication interface. This identifier may be provisioned at the time of manufacture or received securely at a later time.

Whilst being very small in size (e.g. around 1-10cm), the architecture provides a high level of flexibility, particularly in regard to being able to specify which parameters are required to be measured, how and when they are measured and how the information is processed before storage or onward communication. This makes the battery monitor suitable for a greater range of different applications. Such applications may require these aspects and functionality to be modified during use. To accommodate this the software program within the battery monitor that controls the measurement, processing, storage and communication of battery is reconfigurable, replaceable and/or may be updated in the field. This may be done for example, using a smartphone, PC or other external electronic device in communication with the battery monitor via the communication interface. Such configuration may also be achieved remotely over a communications network to which the battery monitor is connected. The changes may involve sending new configuration parameters to be stored in the battery monitor, or replacing the software in the battery monitor either wholly or in part. Software updates and other configuration commands may also be secured or communicated using cryptographic security techniques, for example.

The battery monitor may include a cryptographic capability which allows the battery data to be digitally signed and/or encrypted before transmission over the communication interface. This may also allow verification of the identity of a connecting electronic device.

The battery data transmitted to the external device may be then stored within a blockchain or other such cryptographically secured ledger, thus providing a tamper-proof record of the battery data. The interaction with the blockchain or other ledger may be performed by a trusted application running on a smartphone, PC or other device with which the battery monitor is in communication. The battery monitor may also incorporate an in-situ, real-life use rated load test facility that is preferably configured to reduce or minimise the stress that this imposes on the battery. Ideally, this functionality may be tailored or customised for particular and different purposes.

In accordance with a first aspect there is provided a battery monitoring system, as described in claim 1.

In accordance with a second aspect there is provided a method of monitoring a battery, as described in claim 14. Therefore, battery health can be monitored more securely and abuse or bad practice can be detected without being covered up by a user.

Preferably, the secure data store may be remote from the battery monitor. The secure data store may also be local to the battery monitor and/or data can be moved to the secure data store immediately or in batches to reduce power requirements. Security may be implemented using hardware and/or software and may be in the form of any one or more of encryption, password protection, physical protection, obfuscation, or other techniques. There may be more than one data stores (e.g. local and remote). Preferably, both or all may be secure.

Optionally, the communications interface may be any one or more selected from: a wired interface, a wireless interface, USB, WiFi, Bluetooth, Zigbee, LPWAN, LoRaWAN, Sigfox, Near Field Communication, and cellular. Other interfaces may be used. The interface may communicate locally or over a network (e.g. the Internet).

Preferably, the secure data store may comprise a distributed ledger. The detected electrical parameters may be added as separate entries, blocks or otherwise stored in the distributed ledger.

Optionally, the distributed ledger may be based on Ripple Transaction Protocol (RTXP) or hashgraph. For example, Ripple uses consensus based verification of data blocks between servers. Other distributed ledger technology may be used.

Preferably, the secure data store may comprise a blockchain and further wherein the detected electrical parameters are added as blocks to the blockchain.

Optionally, the identifier of the secondary battery is added to the data by digitally signing the data by the processor. Therefore, the identifier can resist tampering more effectively.

Optionally, the battery monitoring system may further comprise a timer or clock and wherein the instructions further cause the processor to:
receive the one or more signals from the electrical circuit at intervals monitored by the timer and between intervals reduce or shut down electrical functions of the battery monitor. Therefore, power requirements can be reduced as the electrical circuit only operates or operates on full power for shorter periods of time. These intervals may be varied or extended over time to extend battery life, for example.

Optionally, the battery electrical parameters of the secondary battery may include any one or more of: charging current, peak charging current, charging time, charging cycle number, temperature, charging temperature, voltage, lowest voltage, voltage, current, capacity, resistance, impedance, and AC reactance, for example. Other parameters or values or combinations of any of these values may be detected and used. For example, geographical position or location (e.g. GPS data) may be acquired as a further parameter, detected and used together and in the same way with the electrical parameters.

Optionally, the secondary battery may be any one of a lithium ion battery, a lead-acid battery, a nickel-metal hydride battery, a nickel-cadmium battery, a lithium-polymer battery or a capacitor.

Optionally, the memory storing instructions may include instructions which, when executed by the processor, may further cause the processor to:
control the electrical circuit to detect a subset of the one or more electrical parameters of the secondary battery. Therefore, the system is configurable in that different parameters can be monitored and stored depending on requirements. These configurable parameters may also include non-electrical parameters, including location (e.g. GPS data).

Optionally, the memory storing instructions may include instructions which, when executed by the processor, may further cause the processor to:
receive a configuration instruction to modify the type or types of one or more electrical parameters detected by the electrical circuit. This allows the parameters (electrical or not) to be configured in use or in the field. Alternatively, all electrical parameters may be detected but only a subset may be stored. This may also be configurable.

Optionally, the memory storing instructions may include instructions which, when executed by the processor, may further cause the processor to:
receive a configuration instruction to alter a software program stored within the memory, wherein the software program controls the execution of the processor. Therefore, software or firmware used to control or operate the system may be updated or changed when in use or in the field.

Preferably, the battery monitoring system may further comprise an interface configured to receive the configuration instructions. This interface may be a physical interface, for example.

Optionally, the interface is any one of: USB, Bluetooth, Wi-Fi, GSM, cellular, wired, wireless or Near Field Communication, NFC. Other interfaces may be used. In one example implementation, a smartphone may be used to locally (e.g. using Bluetooth or any of the other interface types) alter the operation of the battery monitoring system, change the parameters that are detected and stored and/or update or replace software or firmware.

The battery monitor may comprise any one or more of the features of the battery monitoring system described above.

Preferably, the identifier of the secondary battery is added to the data by digitally signing the data by the processor.

Optionally, the secure data store may be remote from the battery monitor.

Optionally, the secure data store may comprise a distributed ledger.

Advantageously, the distributed ledger is based on Ripple Transaction Protocol, RTXP, or hashgraph. Other distributed ledger technology may be used.

Optionally, the secure data store may comprise a blockchain or other digital ledger and further wherein the detected electrical parameters are added as blocks to the blockchain.

Optionally, the step of associating the identifier of the secondary battery further comprises digitally signing the data.

Optionally, the step of receiving one or more signals from the electrical circuit occurs at intervals.

Optionally, the method may further comprise the step of reducing or shutting down electrical functions of the electrical circuit between the receiving intervals. This may, reduce the overall power consumption to a low level.

Optionally, the battery electrical parameters of a secondary battery include any one or more of: charging current, peak charging current, charging time, charging cycle number, temperature, charging temperature, voltage, lowest voltage, voltage, current, capacity, resistance, impedance, and AC reactance.

The methods described above may be implemented as a computer program comprising program instructions to operate a computer. The computer program may be stored on a computer-readable medium or transmitted over a network such as the Internet.

The computer system may include a processor or processors (e.g. local, virtual or cloud-based) such as a Central Processing unit (CPU), and/or a single or a collection of Graphics Processing Units (GPUs). The processor may execute logic in the form of a software program. The computer system may include a memory including volatile and non-volatile storage medium. A computer-readable medium may be included to store the logic or program instructions. The different parts of the system may be connected using a network (e.g. wireless networks and wired networks). The computer system may include one or more interfaces. The computer system may contain a suitable operating system such as UNIX, Windows (RTM) or Linux, for example.

It should be noted that any feature described above may be used with any particular aspect or embodiment of the invention.

### Brief description of the Figures

The present invention may be put into practice in a number of ways and embodiments will now be described by way of example only and with reference to the accompanying drawings, in which:
FIG. 1 shows a schematic circuit diagram of a battery monitor, given by way of example only;
FIG. 2 shows a schematic diagram of a system including the battery monitor of figure 1, given by way of example only;
FIG. 3a shows a schematic diagram of an example configuration of the battery monitor of figure 1 and a battery;
FIG. 3b shows a schematic diagram of a further example configuration of the battery monitor of figure 1 and a battery;
FIG. 3c shows a schematic diagram of a further example configuration of the battery monitor of figure 1 and a battery;
FIG. 4 shows a schematic diagram of a network of secure data stores used to store data generated by the battery monitor of figure 1; and
FIG. 5 shows a flowchart of a method of monitoring one or more batteries.

It should be noted that the figures are illustrated for simplicity and are not necessarily drawn to scale. Like features are provided with the same reference numerals.

### Detailed description of the preferred embodiments

A battery monitor operates by measuring important battery parameters such as the voltage and current (both charge and discharge current), temperature and internal impedance, preferably at regular intervals, typically every few seconds. It has a microprocessor 50 and an in-built memory 70 (e.g. flash memory), which allow it to process and record the information collected. This information is later communicated to a mobile phone or other external device for further processing and/or display. Other parameters relevant to battery performance may also be recorded.

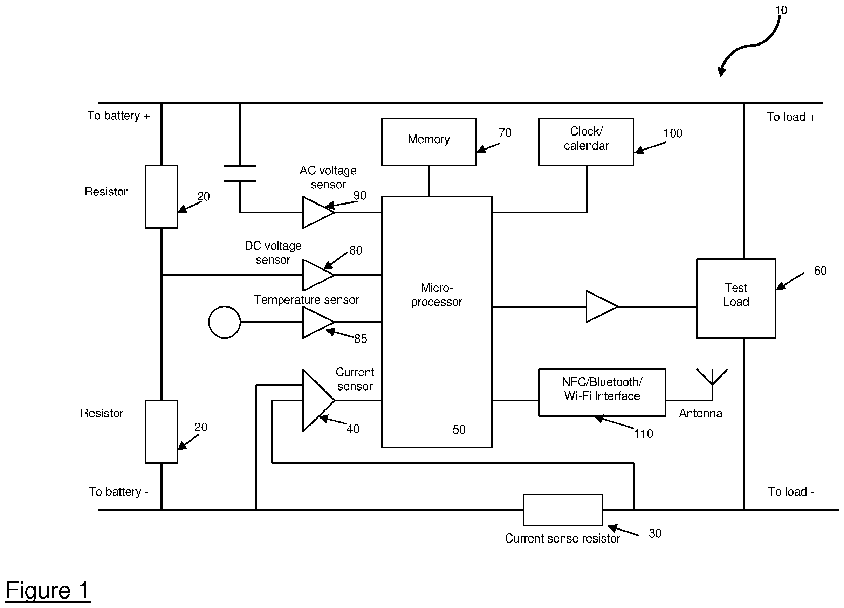

When not performing measurements and related processing, much or all of the circuitry may be powered down in order to reduce the average power consumption of the device to a very low level. Figure 1 shows a block diagram for an example and simplified configuration of the battery monitor 10. Battery voltage is measured using resistors 20 configured as a potential divider, while the current is determined by measuring the voltage developed across a low-value shunt resistor 30 placed between the battery and its load. The direction of the current (charge or discharge) is indicated by the polarity of this voltage. An operational amplifier 40 is employed to buffer, amplify and introduce a DC offset to the measurement voltage as required, in order to provide a suitable signal to drive an ADC input to a microprocessor 50. The battery monitor 10 also includes a temperature sensor 85, such as a thermistor, for example.

The battery monitor 10 may be equipped with a built-in electronic test load 60, which can be applied to the battery under the control of the microprocessor 50. This may be used to apply a DC load to the battery for short periods, in order to check that it is capable of supplying real-life use rated current on demand. Voltage measurements may be made using a DC voltage sensor 80 and these measurements may be made with and without the load applied may be used together to provide an indication of the state of health of the battery. Such testing may be done at regular intervals, but not so frequently as to drain the battery excessively. A variable amount of DC load may be used, for example.

In some implementations, the electronic load may be modulated with an AC waveform, and an AC voltage sensor 90 included in the battery monitor 10 in order to measure the AC impedance, resistance or reactance of the battery. These parameters have been shown to correlate well with the state of health of a battery; and are employed in other battery testers such as those used by garage mechanics.

This AC test can be carried out using relatively small currents and so is especially important for large batteries such as vehicle batteries, where it would not be practical to load with the full rated DC current of the battery. It is particularly helpful to be able to compare impedance/conductance measurements with historic measurements from the same battery, as a change can indicate impending failure of the battery.

Data processing and storage will now be described. The memory 70 used to store the recorded data is preferably non-volatile (e.g. flash memory), so that the information is retained even if the battery is fully discharged or disconnected. The battery monitor 10 is preferably equipped with a means of measuring time (such as a built-in clock/calendar 100) so that the timing of events or measurements can be recorded. The time and date may be set using a mobile phone, or from a network such as the Internet if the battery monitor has online capability. This may be achieved using Wi-Fi or other wireless communications protocol, for example. Therefore, the battery monitor may also include a communications interface 110, which may be used for other communications as well.

In some implementations, the device will not record every individual data point measured, as over a period of months or years as this may require a prohibitive amount of memory. Instead, the battery monitor 10 may process the data, typically recording average, maximum and minimum voltages, currents, and temperatures over longer intervals of perhaps several minutes, hours, days or longer. Nevertheless, this may be sufficient to allow the identification of periods of usage, charging and non-usage, and significant events such as over-charging, deep discharging or excessive currents (both charging and loads). During prolonged periods of non-usage or storage it may be sufficient to record parameters once per day for example, as any changes are likely to occur slowly. Such non-use may be inferred from the battery load being detected or set externally.

The exact nature of the data stored and the timing of this storage can be altered according to particular implementations, batteries and powered devices. These parameters may depend on the requirements of the particular application and the battery monitor 10 can be configured accordingly, either in the factory or in the field.

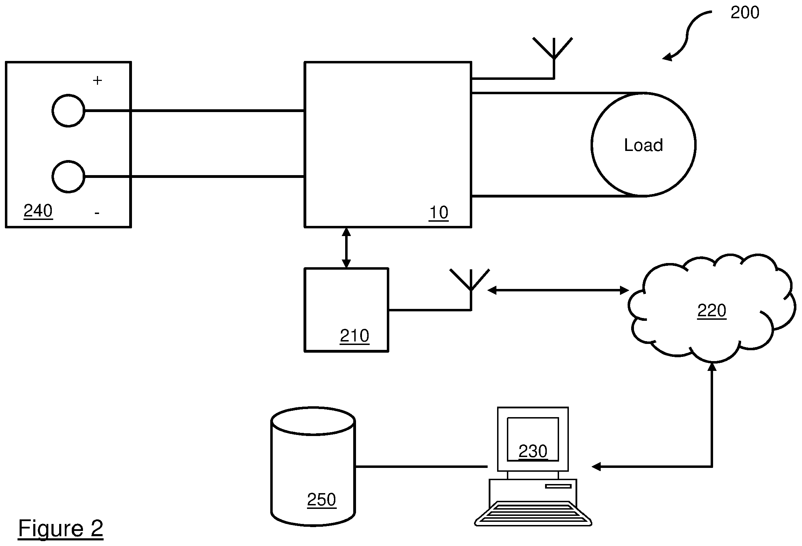

Communication with external devices will now be described with reference to figure 2, which describes a battery monitor system 200. The battery monitor 10 includes a communications interface 110 to allow the recorded information to be read by or transmitted to another device 210 such as a mobile phone or computer, for further processing or display. This communications interface 110 may employ low-cost NFC ("contactless") technology, or alternatively Bluetooth or Wi-Fi could be used. These are all wireless technologies and can be sealed within the equipment so that it is preferably waterproof and weatherproof within an enclosure or housing (not shown in this figure). The external device 210 may be for example, a wireless router allowing the battery monitor to connect to remote stations via a network such as the Internet 220.

An application on a smartphone, PC or other preferably, external or remote device 210 can then present the information transferred from the battery monitor 10 in various forms useful to the user, including graphically. If the communication interface 110 is connected to an Internet based server 230, alerts may be sent by email.

In many cases it can be important for a user of battery operated equipment to know in good time, i.e. preferably before the equipment is needed for use, that the battery is defective (e.g. has a bad cell or cells) or poorly charged. This is particularly true of equipment that is used infrequently, or with long periods of storage or non-use. For example emergency equipment (such as security and fire alarms, etc.) may be called into use very infrequently. Therefore, the battery monitor is provided with a component or functionality that alerts the user that action is required to rectify a problem with the battery or another form or alert or message. The alert may take the form of an email or SMS message, for example, or a notification displayed by an application installed on the user's mobile phone or portable computing device. Other alerts may be used. If the battery monitor has a cellular communications interface, such as a GSM module, it may send an SMS directly to the user or preconfigured recipient(s). Alternatively, communication with the Internet may be provided, for example via Wi-Fi. Therefore, the battery monitor may send a message or email using a server or other remote system. In another example implementation, data may be extracted periodically from the battery monitor by another device using near field communication (NFC) or another communications interface. The extracting device may then issue the alert, e.g. over a cellular network.

The battery monitor 10 may also store identification information, such as a user identifier, serial number or a blockchain address, hash or cryptographic key, which may be assigned at the time of manufacture or subsequently, and any other relevant data, including data relating to the type or configuration of battery 240 being monitored. The stored identification information allows a smartphone, PC or other external device 210 to distinguish between battery monitors when used to read and manage the data from multiple battery monitors.

The data transmitted to the external device 210 will typically consist of timestamped sets of measurement values, which may be spot measurements or processed values such as averages, maximum, minimum values or those calculated over a time period. The external device 210 may read a partial sequence of timestamped data from the battery monitor 10, to add to a database 250 of data (e.g. a secure database) previously read from the battery monitor 10, in order to form a continuous or regular record. It would be necessary only for the external device 210 to read data from the battery monitor 10 sufficiently often that the memory 70 in the battery monitor 10 does not become full or data become lost by being overwritten by new data.

Configuration and reprogramming will now be described. The communications with the external device 210 can be bi-directional, as illustrated by the double-headed arrow between the battery monitor 10 and the external device 210. The external device 210 can also issue commands to the battery monitor 10.

It will be recognized that the nature and frequency of the processed data to be recorded usefully by the battery monitor 10 may depend to a large extent on the particular application of the battery 240 being monitored. An important feature is therefore that the embedded software within the battery monitor 10 can be substantially reconfigured, modified or replaced in the field by sending commands or modifications to the monitor from a smartphone, PC or other external device 210 using the communications interface 110. The battery monitor 10 may also, for example, be reset or its memory 70 cleared by a command from the external device 210.

Security aspects will now be discussed. It is desirable within many applications that the privacy and integrity of the recorded battery data is preserved. It is also desirable that the battery monitor 10 be protected against malicious attacks, which may seek to compromise or alter its function, data or configuration. The battery monitor 10 may therefore include a cryptographic capability, which may include a cryptographic engine implemented in hardware (e.g. a hardware security module). This cryptographic capability may be employed to encrypt and/or digitally sign the battery data before it is transmitted over the communications interface 110. Encrypting the battery parameter data may be achieved by encrypting the data using a private key specific to the battery monitor 10, device and/or battery 240. A digital signature may be applied at the same time or separately encrypting a hash value of the data using the private key. This private key is stored securely within the battery monitor 10. The external device 210 has a corresponding public key and so may be able to decrypt the data, or verify the signature by calculating the hash value of the data and comparing it with the decrypted hash value.

Similarly, commands transmitted to the battery monitor 10 from the external device 210 may be encrypted and /or digitally signed using a private key held by that device 210. The battery monitor 10 holds a corresponding public key in its storage 70 can therefore verify that the connecting device 210 is one authorized to connect to it and issue requests for data or commands. If not then any commands or requests for data can be rejected. It would be especially important to verify the authenticity of any software updates. Any digital signatures may be verified and/or obtained from a certificate authority (not shown in these figures). The battery monitor 10 may also record the time and date of interrogations or interactions with an external device, for audit purposes.

The secure data store 250 will now be described in more detail. This secure data store 250 may implement an external secured ledger. Once transmitted by the battery monitor 10 to the external device 210, the battery data may then be stored in a data block within a blockchain or other similar cryptographically secured ledger, in order to provide a tamper-proof record of the battery history. The existence of such a record may be advantageous in critical industries such as aviation, military, security or medicine where the traceability of faults or problems is important.

A blockchain is a distributed data storage mechanism in which copies of the data are shared between peer nodes in a network. Figure 2 shows only a single secure data store 250 but preferably, there will be a plurality of secure data stores 250 each receiving the data blocks from a plurality of external devices 210. Each secure data store 250 may store and verify the same data blocks.

Each block of data contains a reference to a cryptographic hash of the preceding block, forming a secure chain in a way that makes it very difficult to change or remove any data item without this being detected, as any such change would affect all later blocks in the chain. Security of the data is provided by the decentralization and a high degree of replication of the data across a network, with each node in the network having access to and being able to verify the entire chain, whereas no individual node has overall control of the data or block formation. Such a distributed blockchain secure storage mechanism is described in https://bitcoin.org/bitcoin.pdf.

The nodes in such a secure ledger system would require a certain amount of computing and storage resource to operate. This function is, preferably, performed by a trusted application running on the external device 210 (such as a smartphone or PC) to which the battery monitor data is transmitted. Alternatively, some other computing device downstream may collect the data from multiple battery monitors 10 and pass them on to separate blockchain nodes for secure storage and later verification.

The nodes (either on the external device 210 or separate machines) may for example implement a distributed ledger within a single enterprise that deploys a large number of battery monitors 10. Alternatively the nodes may belong to different entities that have agreed to join together to implement a secured ledger. Each block of data may be encrypted in order to preserve its privacy, and ensure that only authorized agents can view that data, whilst the ledger as a whole can remain more publicly visible in order to demonstrate its integrity.

Packaging and application of the technology will now be described in more detail. The battery monitor 10 may be used as a stand-alone device to be attached to a battery 240, or alternatively the battery monitor 10 may be built into other equipment or even sealed into the battery 240 itself.

Examples of areas in which the battery monitor 10 and associated system 200 might be employed include (but are not limited to):
Medical equipment (including mobility equipment);
Emergency equipment;
Fire and security alarms;
Standby power supplies for IT equipment;
Vehicles, boats etc., especially if used only occasionally;
Sporting equipment, for example a motorised golf caddy;
Agricultural Machinery; and
Aviation.

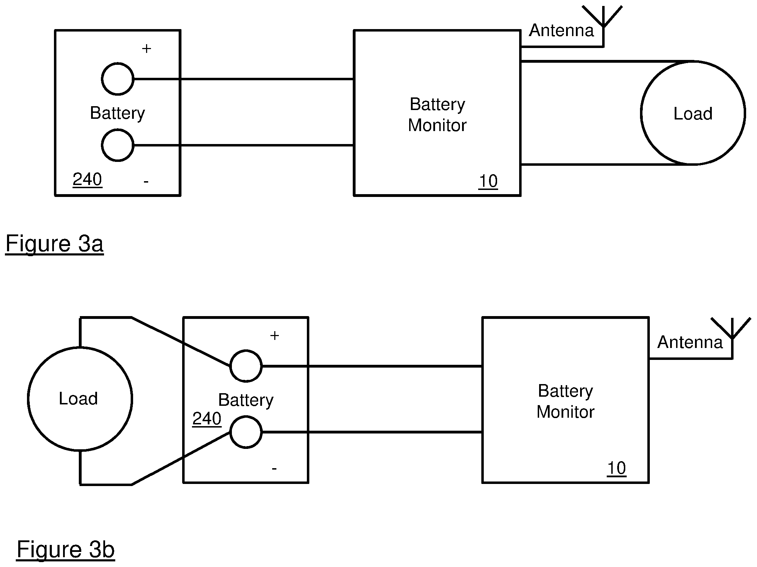

Figures 3a-c show how the battery monitor 10 may be connected in a range of applications and different configurations. Figure 3a shows the battery monitor 10 installed within a piece of battery-powered equipment. The battery monitor 10 is installed between the battery 240 and the equipment load. For example if the equipment is a golf trolley, the load might be the motor and its control circuitry.

Figure 3b shows a stand-alone form of the battery monitor 10, connected across the battery 240 of an existing vehicle or other equipment, in a non-intrusive manner. This would readily allow monitoring of battery voltage and impedance/conductance.

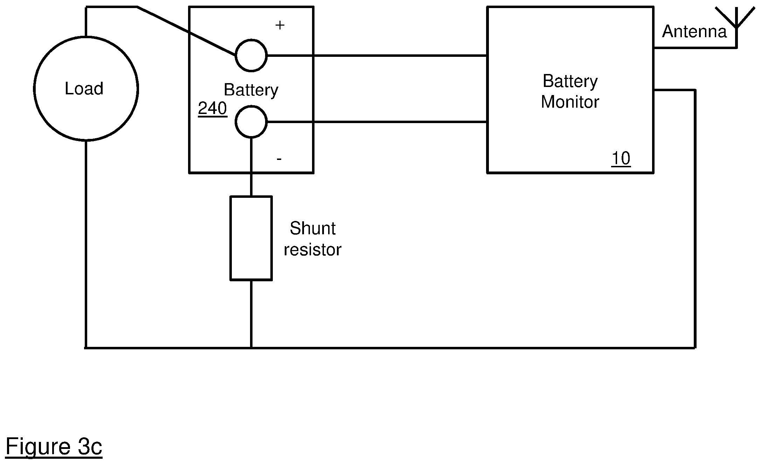

Figure 3c adds to the configuration shown in figure 3b with external shunt resistor, inserted into the battery circuit of the vehicle or equipment, so that the battery current can also be measured.

It would be preferably for the battery monitor 10 to include protection against overvoltage and reverse polarity, especially if it is to be packaged as a stand-alone device. Some form of protection against overcurrent (e.g. a fuse) would also be advantageous, especially if an electronic load is included.

A further development or enhancement of the battery monitor 10 allows multiple batteries to be monitored concurrently. For example a 48-Volt golf cart might employ four 12-Volt batteries in series. In this case, additional DC and/or AC voltage sensors may be added to the battery monitor 10, with additional connections to the mid points between the batteries. This would allow the performance of each battery to be monitored independently. If the batteries are connected in series, only one current sensor and one electronic load may be required, however.

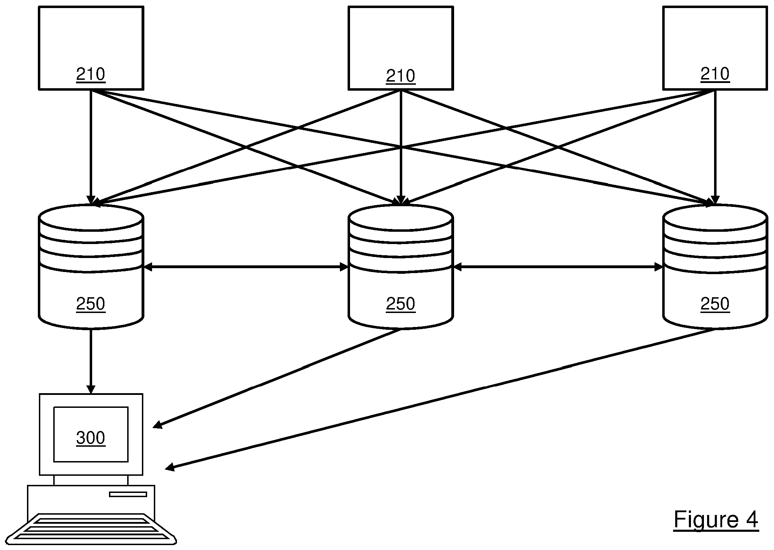

Figure 4 shows a schematic diagram of a network of external devices 210, which have collected battery data, and separate secure data stores 250 in the form of blockchain nodes. Whilst figure 4 shows three external devices 210 (that each may receive data from one or more battery monitors 10), the system may include any number of these and in practice this may include hundreds or thousands of such external devices 210. Furthermore, figure 4 shows three separate blockchain nodes. These nodes may subscribe to or independently receive the battery data and add these data as blocks within their blockchain. These nodes operate as a distributed ledger to ensure that they each have consistent blockchains. The nodes may be within the external devices 210 or be separate and remote (i.e. over a network such as the Internet) from them. Should a blockchain become unavailable or offline then it may replicate the missing blocks when it becomes available and visible to the network again. Similarly new nodes may be added (e.g. as new external devices 210 are added). The more nodes that can be added and the more blocks that are added to a blockchain over a particular block then the reliability and verifiability of the data can increase.

Figure 4 also shows a separate server or computer 300 that can query any one or more of the nodes of the blockchain. For example, this server may belong to a supplier or owner of a battery be used by a third party or customer and that generates battery data using a battery monitor 10. The computer 300 can query the blockchain on any node and find battery data within a block that is associated with a particular identifier of a battery 240. Therefore, the computer 300 can independently verify the battery data (for example timestamped by the battery monitor 10, the external device 210 and/or a miner or node that successfully added the block containing battery data). This may be achieved using the usual blockchain verification techniques. Alternatively, the computer 300 and its verification functionality may be incorporated into one or more of the external devices 210 or software operating on such devices.

In some implementations the external devices 210 and/or the computers 300 may include a blockchain node. Otherwise, these nodes may be maintained independently.

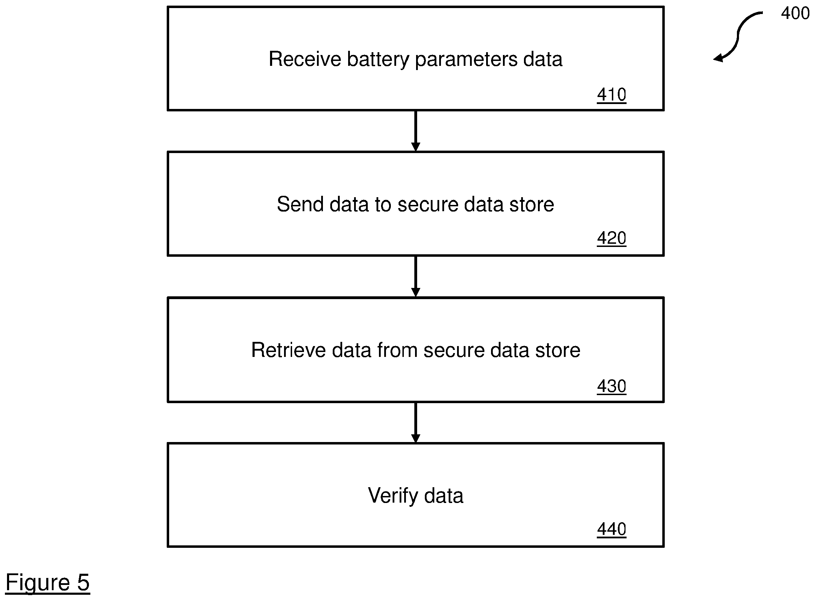

Figure 5 shows a flowchart with an overview of a method 400 for monitoring one or more batteries. This flowchart provides an overview of the process for using the battery monitor 10, associated system 200 and secure data stores 250, described previously. The external device 210 receives battery parameter data and associated identifier at step 410. These data are sent to the secure data store 250 or blockchain nodes at step 420. The first node or miner to find the next block adds the block to the blockchain and these blocks are replicated across all nodes. Blocks are built up over time in this way. Blockchain archives may be used to reduce their size, if required.

When a user wishes to view battery data then they can retrieve these data at step 430 (i.e. data relating to a particular identifier) from a blockchain at one or more nodes. These data are verified cryptographically and extracted or viewed at step 440. Individual data items may be retrieved or all data items for a particular identifier (e.g. battery 240) may be retrieved and verified in this way.

The user or computer 300 may use these retrieved data to determine a battery usage history and so can determine whether any abuse, use outside suggested parameters or other events affecting the performance or life of the battery have taken place. Such data may also indicate safe usage or usage within suggested parameters.

As will be appreciated by the skilled person, details of the above embodiment may be varied without departing from the scope of the present invention, as defined by the appended claims.

For example, the external device 210 may also be an internal device located local to the battery monitor 10 and battery 240. This can make the system fully enclosed but may require more power to be drawn from the battery being monitored. Whilst the system has been described with reference to secondary or rechargeable batteries, other implementations may monitor batteries that are not designed to be recharged. For example, the system may be used to monitor the performance of batteries designed to power a device for its lifetime. Other forms of distributed ledger may be used for the secure data store.

In some implementations it may be beneficial to record the geographical location of the battery monitor, and to report it over the communications interface. For example the battery may be within mobile equipment or a vehicle. If a fault with the battery is detected the battery may need to be located in order to rectify the problem or replace the battery. This can be achieved by adding a GPS receiver to the battery monitor, giving it the capability to determine its geographical position with a high degree of accuracy. As a further benefit, it would also enable the equipment or battery to be located more easily in the event that it is misplaced or moved without authorization, or without the new location being properly noted by the user. Alternative means of determining the geographical position may also be used. For example, if the battery monitor has a cellular radio communications interface then the cellular network may be used to obtain an approximate location by triangulation or other telecommunication techniques.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Claims

1. A battery monitoring system comprising:
a secure data store (250) comprising a blockchain; and
a battery monitor (10) comprising:
an electrical circuit configured to detect one or more electrical parameters of a secondary battery (240);
a communications interface (110);
a processor (50); and
memory (70) storing instructions which, when executed by the processor (50), cause the processor (50) to:
receive one or more signals from the electrical circuit, the one or more signals containing information describing the detected electrical parameters of the secondary battery (240);
send data containing information derived from the detected electrical parameters of the secondary battery (240) to the secure data store (250) using the communications interface, wherein the data is associated with an identifier of the secondary battery (240) within the secure data store (250),
wherein the detected electrical parameters are added as blocks to the blockchain, and
wherein the identifier of the secondary battery (240) is added to the data by digitally signing the data by the processor (50).

2. The battery monitoring system of claim 1, wherein the secure data store (250) is remote from the battery monitor (10).

3. The battery monitoring system of claim of claim 1 or claim 2, wherein the communications interface is any one or more selected from: a wired interface, a wireless interface, USB, WiFi, Bluetooth, Zigbee, LPWAN, LoRaWAN, Sigfox, Near Field Communication, and cellular.

4. The battery monitoring system according to any previous claim, wherein the secure data store (250) comprises a distributed ledger.

5. The battery monitoring system of claim 4, wherein the distributed ledger is based on Ripple Transaction Protocol, RTXP, or hashgraph.

6. The battery monitoring system according to any previous claim, further comprising a timer and wherein the instructions further cause the processor (50) to:
receive the one or more signals from the electrical circuit at intervals monitored by the timer and between intervals reduce or shut down electrical functions of the battery monitor (10).

7. The battery monitoring system according to any previous claim, wherein the battery electrical parameters of a secondary battery (240) include any one or more of: charging current, peak charging current, charging time, charging cycle number, temperature, charging temperature, voltage, lowest voltage, voltage, current, capacity, resistance, AC impedance, and AC reactance.

8. The battery monitoring system according to any previous claim, wherein the secondary battery (240) is any one of a lithium ion battery, a lead-acid battery, a nickel-metal hydride battery, a nickel-cadmium battery, a lithium-polymer battery or a capacitor.

9. The battery monitoring system according to any previous claim, wherein the memory (70) storing instructions which, when executed by the processor (50), further cause the processor (50) to:
control the electrical circuit to detect a subset of the one or more electrical parameters of the secondary battery.

10. The battery monitoring system of claim 9, wherein the memory (70) storing instructions which, when executed by the processor (50), further cause the processor (50) to:
receive a configuration instruction to modify the type or types of one or more electrical parameters detected by the electrical circuit.

11. The battery monitoring system of claim 9 or claim 10, wherein the memory (70) storing instructions which, when executed by the processor (50), further cause the processor (50) to:
receive a configuration instruction to alter a software program stored within the memory (70), wherein the software program controls the execution of the processor (50).

12. The battery monitoring system according to any of claims 9 to 11 further comprising an interface configured to receive the configuration instruction.

13. The battery monitoring system of claim 12, wherein the interface is any one of: USB, Bluetooth, WiFi, GSM, cellular, wired, wireless or Near Field Communication, NFC.

14. A method of monitoring a battery comprising the steps of:
receiving one or more signals from an electrical circuit, the one or more signals containing information describing electrical parameters detected from a secondary battery (240);
sending data containing information derived from the detected electrical parameters of the secondary battery (240) to a secure data store using a communications interface, wherein the data is associated with an identifier of the secondary battery within the secure data store,
wherein the secure data store comprises a blockchain and further wherein the detected electrical parameters are added as blocks to the blockchain, and
wherein the step of associating the identifier of the secondary battery (240) further comprises digitally signing the data.

15. The method of claim 14, wherein the step of receiving one or more signals from the electrical circuit occurs at intervals, the method further comprising the step of reducing or shutting down electrical functions of the electrical circuit between the receiving intervals.

## Patentansprüche

1. Batterieüberwachungssystem, umfassend:
einen sicheren Datenspeicher (250), welcher eine Blockchain umfasst; und
ein Batterieüberwachungsgerät (10), umfassend:
eine elektrische Schaltung, welche dazu eingerichtet ist, einen oder mehrere elektrische Parameter einer Sekundärbatterie (240) zu detektieren;
eine Kommunikationsschnittstelle (110);
einen Prozessor (50); und
einen Speicher (70), welcher Anweisungen speichert, welche, wenn sie durch den Prozessor (50) ausgeführt werden, den Prozessor (50) veranlassen zum:
Empfangen eines oder mehrerer Signale von der elektrischen Schaltung, wobei das eine oder die mehreren Signale Informationen enthalten, welche die detektierten elektrischen Parameter der Sekundärbatterie (240) beschreiben;
Senden von Daten, welche Informationen enthalten, welche von den detektierten elektrischen Parametern der Sekundärbatterie (240) abgeleitet sind, an den sicheren Datenspeicher (250) unter Verwendung der Kommunikationsschnittstelle, wobei die Daten mit einer Kennung der Sekundärbatterie (240) innerhalb des sicheren Datenspeichers (250) assoziiert sind,
wobei die detektierten elektrischen Parameter als Blöcke zu der Blockchain hinzugefügt werden, und
wobei die Kennung der Sekundärbatterie (240) durch digitales Signieren der Daten durch den Prozessor (50) zu den Daten hinzugefügt wird.

2. Batterieüberwachungssystem nach Anspruch 1, wobei der sichere Datenspeicher (250) von dem Batterieüberwachungsgerät (10) entfernt ist.

3. Batterieüberwachungssystem nach Anspruch 1 oder Anspruch 2, wobei die Kommunikationsschnittstelle eines oder mehrere ist, ausgewählt aus: einer drahtgebundenen Schnittstelle, einer drahtlosen Schnittstelle, USB, WiFi, Bluetooth, Zigbee, LPWAN, LoRaWAN, Sigfox, Nahfeld-Kommunikation und Mobilfunk.

4. Batterieüberwachungssystem nach einem vorhergehenden Anspruch, wobei der sichere Datenspeicher (250) ein verteiltes Ledger umfasst.

5. Batterieüberwachungssystem nach Anspruch 4, wobei das verteilte Ledger auf Ripple-Transaktions-Protokoll, RTXP, oder Hashgraph basiert.

6. Batterieüberwachungssystem nach einem vorhergehenden Anspruch, ferner umfassend einen Zeitgeber und wobei die Anweisungen ferner den Prozessor (50) veranlassen zum:
Empfangen des einen oder der mehreren Signale von der elektrischen Schaltung an Intervallen, welche durch den Zeitgeber überwacht werden, und zwischen Intervallen, Reduzieren oder Ausschalten elektrischer Funktionen des Batterieüberwachungsgerätes (10).

7. Batterieüberwachungssystem nach einem vorhergehenden Anspruch, wobei die elektrischen Batterieparameter einer Sekundärbatterie (240) eines oder mehrere umfassen aus: einem Ladestrom, einem Spitzenladestrom, einer Ladezeit, einer Ladezyklusanzahl, einer Temperatur, einer Ladetemperatur, einer Spannung, einer geringsten Spannung, einer Spannung, einem Strom, einer Kapazität, einem Widerstand, einer AC-Impedanz und einer AC-Reaktanz.

8. Batterieüberwachungssystem nach einem vorhergehenden Anspruch, wobei die Sekundärbatterie (240) eines ist aus einer Lithium-Ionen-Batterie, einer Blei-Säure-Batterie, einer Nickel-Metallhydrid-Batterie, einer Nickel-Cadmium-Batterie, einer Lithium-Polymer-Batterie oder einem Kondensator.

9. Batterieüberwachungssystem nach einem vorhergehenden Anspruch, wobei der Speicher (70) Anweisungen speichert, welche, wenn sie durch den Prozessor (50) ausgeführt werden, den Prozessor (50) ferner veranlassen zum:
Steuern der elektrischen Schaltung, um eine Untergruppe des einen oder der mehreren elektrischen Parameter der Sekundärbatterie zu detektieren.

10. Batterieüberwachungssystem nach Anspruch 9, wobei der Speicher (70) Anweisungen speichert, welche, wenn sie durch den Prozessor (50) ausgeführt werden, den Prozessor (50) ferner veranlassen zum:
Empfangen einer Konfigurationsanweisung, um die Art oder die Arten des einen oder der mehreren elektrischen Parameter zu modifizieren, welche durch die elektrische Schaltung detektiert werden.

11. Batterieüberwachungssystem nach Anspruch 9 oder Anspruch 10, wobei der Speicher (70) Anweisungen speichert, welche, wenn sie durch den Prozessor (50) ausgeführt werden, den Prozessor (50) ferner veranlassen zum:
Empfangen einer Konfigurationsanweisung, um ein Softwareprogramm zu verändern, welches in dem Speicher (70) gespeichert ist, wobei das Softwareprogramm die Ausführung des Prozessors (50) steuert.

12. Batterieüberwachungssystem nach einem der Ansprüche 9 bis 11, ferner umfassend eine Schnittstelle, welche dazu eingerichtet ist, die Konfigurationsanweisung zu empfangen.

13. Batterieüberwachungssystem nach Anspruch 12, wobei die Schnittstelle eines ist aus: USB, Bluetooth, WiFi, GSM, Mobilfunk, drahtgebunden, drahtlos oder Nahfeld-Kommunikation, NFC.

14. Verfahren zum Überwachen einer Batterie, umfassend die Schritte aus:
Empfangen eines oder mehrerer Signale von einer elektrischen Schaltung, wobei das eine oder die mehreren Signale Informationen enthalten, welche elektrische Parameter beschreiben, welche von einer Sekundärbatterie (240) detektiert sind;
Senden von Daten, welche Informationen enthalten, welche von den detektierten elektrischen Parametern der Sekundärbatterie (240) abgeleitet sind, an einen sicheren Datenspeicher unter Verwendung einer Kommunikationsschnittstelle, wobei die Daten mit einer Kennung der Sekundärbatterie innerhalb des sicheren Datenspeichers assoziiert sind,
wobei der sichere Datenspeicher eine Blockchain umfasst und ferner wobei die detektierten elektrischen Parameter als Blöcke zu der Blockchain hinzugefügt werden, und
wobei der Schritt eines Assoziierens der Kennung der Sekundärbatterie (240) ferner ein digitales Signieren der Daten umfasst.

15. Verfahren nach Anspruch 14, wobei der Schritt eines Empfangens eines oder mehrerer Signale von der elektrischen Schaltung an Intervallen auftritt, wobei das Verfahren ferner den Schritt eines Reduzierens oder Ausschaltens elektrischer Funktionen der elektrischen Schaltung zwischen den Empfangsintervallen umfasst.

## Revendications

1. Système de surveillance de batterie comprenant :
un magasin de données sécurisé (250) comprenant une chaîne de blocs ; et
un moniteur de batterie (10) comprenant :
un circuit électrique configuré pour détecter un ou plusieurs paramètres électriques d'une batterie secondaire (240) ;
une interface de communication (110) ;
un processeur (50) ; et
une mémoire (70) stockant des instructions qui, lorsqu'elles sont exécutées par le processeur (50), amènent le processeur (50) à :
recevoir un ou plusieurs signaux du circuit électrique, les un ou plusieurs signaux contenant des informations décrivant les paramètres électriques détectés de la batterie secondaire (240) ;
envoyer des données contenant des informations dérivées des paramètres électriques détectés de la batterie secondaire (240) au magasin de données sécurisé (250) à l'aide de l'interface de communication, dans lequel les données sont associées à un identifiant de la batterie secondaire (240) dans le magasin de données sécurisé (250),
dans lequel les paramètres électriques détectés sont ajoutés en tant que blocs à la chaîne de blocs, et
dans lequel l'identifiant de la batterie secondaire (240) est ajouté aux données en signant numériquement les données par le processeur (50).

2. Système de surveillance de batterie selon la revendication 1, dans lequel le magasin de données sécurisé (250) est distant du moniteur de batterie (10).

3. Système de surveillance de batterie selon la revendication 1 ou la revendication 2, dans lequel l'interface de communication est un ou plusieurs éléments quelconques choisis parmi : une interface filaire, une interface sans fil, USB, WiFi, Bluetooth, Zigbee, LPWAN, LoRaWAN, Sigfox, communication en champ proche, et cellulaire.

4. Système de surveillance de batterie selon une quelconque revendication précédente, dans lequel le magasin de données sécurisé (250) comprend un registre distribué.

5. Système de surveillance de batterie selon la revendication 4, dans lequel le registre distribué est basé sur le protocole de transaction Ripple, RTXP, ou Hashgraph.

6. Système de surveillance de batterie selon une quelconque revendication précédente, comprenant en outre une minuterie et dans lequel les instructions amènent en outre le processeur (50) à :
recevoir les un ou plusieurs signaux du circuit électrique à des intervalles surveillés par la minuterie et, entre des intervalles, réduire ou arrêter des fonctions électriques du moniteur de batterie (10).

7. Système de surveillance de batterie selon une quelconque revendication précédente, dans lequel les paramètres électriques de batterie d'une batterie secondaire (240) comportent un ou plusieurs éléments quelconques parmi : un courant de charge, un courant de charge de pic, un temps de charge, un nombre de cycles de charge, une température, une température de charge, une tension, une tension la plus basse, une tension, un courant, une capacité, une résistance, une impédance CA et une réactance CA.

8. Système de surveillance de batterie selon une quelconque revendication précédente, dans lequel la batterie secondaire (240) est un élément quelconque parmi une batterie lithium-ion, une batterie plomb-acide, une batterie nickel-hydrure métallique, une batterie nickel-cadmium, une batterie lithium-polymère ou un condensateur.

9. Système de surveillance de batterie selon une quelconque revendication précédente, dans lequel la mémoire (70) stocke des instructions qui, lorsqu'elles sont exécutées par le processeur (50), amènent en outre le processeur (50) à :
commander le circuit électrique pour détecter un sous-ensemble des un ou plusieurs paramètres électriques de la batterie secondaire.

10. Système de surveillance de batterie selon la revendication 9, dans lequel la mémoire (70) stocke des instructions qui, lorsqu'elles sont exécutées par le processeur (50), amènent en outre le processeur (50) à :
recevoir une instruction de configuration pour modifier le type ou les types d'un ou de plusieurs paramètres électriques détectés par le circuit électrique.

11. Système de surveillance de batterie selon la revendication 9 ou la revendication 10, dans lequel la mémoire (70) stocke des instructions qui, lorsqu'elles sont exécutées par le processeur (50), amènent en outre le processeur (50) à :
recevoir une instruction de configuration pour changer un programme logiciel stocké dans la mémoire (70), dans lequel le programme logiciel commande l'exécution du processeur (50).

12. Système de surveillance de batterie selon l'une quelconque des revendications 9 à 11, comprenant en outre une interface configurée pour recevoir l'instruction de configuration.

13. Système de surveillance de batterie selon la revendication 12, dans lequel l'interface est un élément quelconque parmi : USB, Bluetooth, WiFi, GSM, cellulaire, filaire, sans fil, ou communication en champ proche, CCP.

14. Procédé de surveillance d'une batterie comprenant les étapes consistant à :
recevoir un ou de plusieurs signaux d'un circuit électrique, les un ou plusieurs signaux contenant des informations décrivant des paramètres électriques détectés à partir d'une batterie secondaire (240) ;
envoyer des données contenant des informations dérivées des paramètres électriques détectés de la batterie secondaire (240) à un magasin de données sécurisé à l'aide d'une interface de communication,
dans lequel les données sont associées à un identifiant de la batterie secondaire dans le magasin de données sécurisé,
dans lequel le magasin de données sécurisé comprend une chaîne de blocs et en outre dans lequel les paramètres électriques détectés sont ajoutés en tant que blocs à la chaîne de blocs, et
dans lequel l'étape consistant à associer l'identifiant de la batterie secondaire (240) comprend en outre la signature numérique des données.

15. Procédé selon la revendication 14, dans lequel l'étape consistant à recevoir un ou plusieurs signaux du circuit électrique se produit à intervalles, le procédé comprenant en outre l'étape consistant à réduire ou arrêter des fonctions électriques du circuit électrique entre les intervalles de réception.
